# EUROPÄISCHE PATENTANMELDUNG

(11) **EP 0 575 864 A2**
(43) Veröffentlichungstag der Anmeldung: **29.12.1993**
(21) Anmeldenummer: 93109526.9
(22) Anmeldetag: 15.06.1993
(51) Int. Cl.: B60L 11/18

(54) **Verfahren und Vorrichtung zur Energieabgabe**

(30) Priorität: 16.06.1992 CH 1900/92
(71) Anmelder: Baer, Hans, Dr., CH-8006 Zürich (CH); Flueckiger, Daniel, CH-6410 Goldau (CH); Hirsbrunner, Eduard, Dr., CH-8006 Zürich (CH); Steimer, Gail, CH-8006 Zürich (CH)
(72) Erfinder: Baer, Hans, Dr., CH-8006 Zürich (CH); Flueckiger, Daniel, CH-6410 Goldau (CH)
(74) Vertreter: Ritscher, Thomas, Dr.

(57) **Zusammenfassung**

Verfahren und Vorrichtung beziehen sich auf eine einfache und schnelle Abgabe an elektrischer Energie an ein Strassenfahrzeug mit elektromotorischem Antrieb, der von einer Batterie gespiesen wird. Die energiearme Batterie wird ausgebaut und durch eine energiereiche Batterie ersetzt. Der Wert der Restenergie der ausgebauten Batterie wird gemessen und der Unterschied zwischen den Werten der eingebauten und ausgebauten Batterie ermittelt. Dieser Unterschied, der den zu bezahlenden Kosten entspricht, wird bis zur Begleichung dieser Kosten gespeichert. Die Handhabung der Batterien erfolgt mindestens halbautomatisch. Das Fahrzeug, das insbesondere als Strassenfahrzeug konzipiert ist, weist eine praktisch frei zugängliche Batterieaufnahmekammer auf.

## Beschreibung

Die Erfindung betrifft ein Verfahren nach dem Oberbegriff des Anspruchs 1, eine Vorrichtung nach dem Oberbegriff des Anspruchs 4 und ein Fahrzeug nach dem Oberbegriff des Anspruchs 15.

Fahrzeuge dieser Art, die man im allgemeinen als Elektrofahrzeuge bezeichnet, waren ursprünglich als abgasfreie Transportfahrzeuge zur Verwendung in geschlossenen Räumen wie z.B. Fabrikhallen und Lagern sowie in halb geschlossenen Hallen wie z.B. Bahnhöfen und Flughäfen bestimmt.

Im Bestreben, sowohl die Vorräte an fossilen Brennstoffen auf Erdölbasis zu schonen, wie auch die Abgasproduktion von Verbrennungsmotoren zu drosseln, werden seit einigen Jahren auch Elektromobile als Ersatz für Automobile mit Verbrennungsmotoren entwickelt. Dass diese Elektromobile, die im wahren Sinn des Wortes eigentlich auch Automobile sind, keine Verbreitung finden, liegt unter anderem daran, dass es bis heute nicht gelungen ist, Batterien zu entwickeln, die zu marktgängigen Preisen angeboten werden können, deren Abmessungen und Gewichte etwa diejenigen von gefüllten Treibstofftanks der Automobile entsprechen und die mindestens annähernd die gleichen Geschwindigkeiten, Beschleunigungen und Reichweiten erlauben, die bei heutigen Automobilen als üblich betrachtet werden. Das Gewicht bekannter Batterien beträgt z.B. 100 Kilogramm und erlaubt bei Geschwindigkeiten und Beschleunigungen, die denjenigen von Automobilen mit Verbrennungsmotoren unterlegen sind, Reichweiten von nur ca. 150 bis maximal 250 Kilometern, während die Anschaffungskosten der heute erhältlichen Elektromobile das 2 - 3fache von eher kleinen Automobilen mit Verbrennungsmotoren betragen.

Durch die Konstruktion von sogenannten Hybridfahrzeugen, die als Antrieb sowohl einen Elektromotor als auch einen Verbrennungsmotor aufweisen, versucht man, ein Fahrzeug zu schaffen, das einerseits im Stadt- bzw. Agglomerationsverkehr mit mässigen Geschwindigkeiten und geringen Reichweiten, dafür schadstofffrei und geräuscharm zirkuliert und das anderseits Überlandfahrten über grössere Distanzen und mit den als normal empfundenen Geschwindigkeiten, allerdings unter Schadstoff und Geräuschentwicklung, ermöglicht. Bei einigen Hybridfahrzeugen wird die Art des Antriebs durch den Benützer gewählt, andere Hybridfahrzeuge weisen einen Verstellmechanismus auf, durch welchen selbstätig in Abhängigkeit der geforderten Leistung bzw. bei Überschreiten einer bestimmten Leistung von elektro- auf den verbrennungsmotorischen Antrieb umgeschaltet wird und umgekehrt.

Die Hybridfahrzeuge weisen zahlreiche Nachteile auf. Verursacht durch den doppelten Antrieb sind die Herstellungskosten und das Gewicht hoch, der nutzbare Raum aber relativ klein. Das hohe Gewicht verursacht einen verhältnismässig grossen Verbrauch an Antriebsenergie, so dass der Gesamtenergieverbrauch höher ist als der Energieverbrauch eines Fahrzeuges, dass nur einen Elektro- oder Verbrennungsmotor aufweist, es sei denn, man führe Stadtfahrten nur mit leerem Treibstofftank und Überlandfahrten ohne Batterie aus, was aber eine praktisch nicht zu erfüllende Forderung ist. Ein gewisser Vorteil der Hybridfahrzeuge liegt darin, dass wenigstens im Stadtverkehr kein Abgasausstoss erfolgt, so dass mindestens die am dichtesten besiedelten Gebiete in dieser Beziehung etwas geschont werden. Gesamthaft betrachtet wird aber die Umweltverschmutzung nur wenig reduziert, da die Überlandstrecken mit verbrennungsmotorischem Antrieb gefahren werden. Bei denjenigen Hybridfahrzeugen, die dem Benützer die freie Wahl zwischen den Antriebsarten überlassen, besteht ausserdem die Gefahr, dass auch im Stadtverkehr kaum mit elektromotorischem Antrieb gefahren wird, weil es vorläufig bedeutend einfacher und weniger zeitraubend ist, einen Treibstofftank zu füllen als eine Batterie nachzuladen.

Das Nachladen der Batterien, die als Speicher für die elektrische Energie sowohl bei den Hybridfahrzeugen wie auch bei den reinen Elektromobilen dienen, muss, wie schon erwähnt, verhältnismässig häufig erfolgen, da der Energievorrat einer Batterie nur für Strecken reicht, die im Bereich von 50 - 200 Kilometern liegen.

Zum Zweck des Nachladen werden die Batterien über Kabel ans Netz angeschlossen. Falls täglich nicht mehr als die erwähnten Kilometerzahlen gefahren werden, kann das Aufladen im allgemeinen problemlos nachts an einer Steckdose einer Garage oder Einstellhalle erfolgen, gegebenenfalls auch tagsüber am Arbeitsort.

Bei grösserer Verbreitung der Elektromobile und Hybridfahrzeuge werden wahrscheinlich vermehrt sogenannte Elektrotanksäulen, gegebenenfalls in Kombination mit Parkingmetern, errichtet werden, wie sie z.B. in Skandinavien und Kanada bereits zum Heizen parkierter Fahrzeuge im Winter und auf Campingplätzen zur Stromversorgung von Wohnwagenanhängern und Reisemobilen vorhanden sind. Diese Vorrichtungen weisen Zähler zur Ermittlung der konsumierten Menge an Elektroenergie auf und sind im allgemeinen mit Zahlstellen ausgerüstet, die alle möglichen Zahlungsmittel wie Geldmünzen, Banknoten, Jetons, Gutscheine annehmen und auch mit Lesevorrichtungen für Kreditkarten ausgerüstet sein können.

Der Nachteil dieser Vorrichtungen besteht darin, dass die Abgabe der elektrischen Energie an das Fahrzeug, das heisst, das Nachladen der Batterien, eine verhältnismässig lange Zeit beansprucht. Dies schliesst die Verwendung von Elektromobilen bzw. den elektrischen Betrieb von Hybridfahrzeugen nicht nur für Überlandfahrten, sondern auch für den weiteren Agglomerationsverkehr und insbesondere für Liefer- bzw. Dienstfahrzeuge, Taxis und ähnliche Fahrzeuge aus.

Eine Verkürzung der Nachladezeit könnte allenfalls erreicht werden, wenn serien- oder paralellgeschaltete segmentierte Batterien verwendet würden, wobei die Segmente gleichzeitig über ein Vielzahl von Kabeln oder über ein Multikabel aufgeladen werden könnten; aber auch durch ein solches System liese sich das Aufladen nicht auf die angestrebte Dauer von etwa 5 Minuten, was ungefähr der zum Füllen eines Treibstofftanks benötigten Zeit entspricht, verringern.

Die Aufgabe der Erfindung wird somit darin gesehen, anhand vom erwähnten Stand der Technik, wie er durch die sogenannten Elektrotanksäulen mit Zahlstellen gebildet wird, ein zeitsparendes Verfahren zum Abgeben elektrischer Energie an ein Strassenfahrzeug mit elektromotorischem Antrieb und einer Batterie als Energiespeicher, sowie eine Vorrichtung zur Durchführung dieses Verfahrens vorzuschlagen und ein Fahrzeug, insbesondere ein Strassenfahrzeug mit elektromotorischem Antrieb zu schaffen, dem elektrische Energie nach dem erfindungsgemässen Verfahren und mittels der erfindungsgemässen Vorrichtung zugeführt werden kann.

Diese Aufgaben werden erfindungsgemäss durch ein Verfahren mit den Merkmalen des Patentanspruchs 1, eine Vorrichtung mit den Merkmalen des Patentanspruchs 4 und ein Fahrzeug mit den Merkmalen des Patentanspruchs 15 gelöst. Vorteilhafte Weiterbildungen und Ausführungsbeispiele werden durch die entsprechenden abhängigen Patentsprüche umschrieben.

Das erfindungsgemässe Verfahren erhöht die Akzeptanz der Elektromobile für den Strassenverkehr im hohen Masse, da es erlaubt, die Abgabe elektrischer Energie an ein Fahrzeug ebenso schnell und einfach durchzuführen wie das Betanken eines Fahrzeuges mit einem Verbrennungsmotor, indem lediglich eine energiearme Batterie gegen eine energiereiche Batterie ausgetauscht wird, wobei praktisch gleichzeitig der Wert der Restenergie der demontierten Batterie festgestellt und von den Kosten der neuen, zu montierenden Batterie in Abzug gebracht wird, und wobei eine Verrechungsstelle zum sofortigen oder späteren Begleichen der Kosten vorgesehen ist, während das zeitraubende Nachladen der Batterie ausserhalb des Fahrzeuges und möglichst mit preisgünstiger elektrischer Energie, z.B. nachts, durchgeführt wird.

Das Austauschen der Batterien und das Aufladen ausserhalb der Fahrzeuge ist zwar bei den bekannten Elektrofahrzeugen wie Staplern oder Zugfahrzeugen bekannt. Dort können die Batterien im allgemeinen ausserhalb der Arbeitszeiten, also meistens nachts und zu günstigem Stromtarif, und stets am gleichen Ort ausgetauscht und aufgeladen werden. Vorrichtungen und Hilfsmittel zum Ausbauen bzw. Einbauen der Batterien stehen also stets zur Verfügung und können von Fachleuten bedient werden. Ausserdem müssen keine Verrechungsstellen vorgesehen sein und insbesondere besteht in diesem Zusammenhang keine Notwendigkeit, in den ausgebauten Batterien den Restwert der Energie festzustellen und von Kosten der eingebauten Batterien in Abzug zu bringen.

Das erfindungsgemässe Verfahren ist besonders rationell, wenn die ausgebauten Batterien in nächster Umgebung wieder aufgeladen und anschliessend bis zu einem späteren Wiedereinbau in ein anderes Elektromobil in einem Batteriemagazin gelagert werden.

Da nicht anzunehmen ist, dass alle Elektromobile mit einem einzigen Typus von Batterien betrieben werden, ist es günstig, wenn der benötigte Batterietypus aus einer Vielzahl von vorhandenen Typen ausgewählt werden kann.

Die sofortige oder anschliessende Begleichung der Kosten kann vorteilhaft auf verschiedene Weisen erfolgen, z.B. durch sofortige Barzahlung mit Münzen oder Banknoten, durch sofortige Bezahlung mit Jetons oder Gutscheinen, z.B. mit Loch- oder Strichcodes, oder durch spätere Begleichung, z.B. mittels einer Kreditkarte oder einer Abbuchung auf einem Bankkonto.

Die erfindungsgemässe Vorrichtung und insbesondere die für die Benutzer wesentliche Fahrzeugservicestrecke ist einer Treibstofftankstelle ähnlich. Eine energiearme Batterie wird durch eine energiereiche Batterie ersetzt, wobei zur gerätegestützten Handhabung der Batterien einfache und auch von Laien betätigbare Vorrichtungen zur Verfügung stehen. Da der Wert der Restenergie der ausgebauten Batterie ermittelt und von den Kosten der neuen Batterie, die eingebaut wird, in Abzug gebracht wird, besteht keine Gefahr, dass aus Kostengründen mit dem Austausch der Batterien solange gewartet wird, bis das Fahrzeug durch eine Strompanne an einem ungünstigen Ort still gelegt wird.

Die ausgebauten und in der Messstation bezüglich ihrer Restenergie gemessenen Batterien werden anschliessend mit Vorteil in einer Ladestation sofort wieder aufgeladen und im Batteriemagazin, welches mit der Ladestation kombiniert sein kann, bis zum weiteren Gebrauch gelagert.

Die Bearbeitungsstrecke, welche die Messstation, die Ladestation und das Batteriemagazin enthält, wird vorteilhaft aus Gründen der Platzersparnis auf einer anderen Ebene als die Fahrzeugservicestrecke angeordnet, und zwar bevorzugt unterhalb der Fahrzeugservicestrecke.

Der Ersatz eines Verbrennungsmotors durch einen Elektromotor, dessen Batterie am Netz eines mit fossilen Brennstoffen betriebenen Kraftwerkes geladen wird, wäre aus ökologischen Gründen nicht sehr sinnvoll. Insbesondere in Ländern mit leistungsfähigen hydraulischen Kraftwerken ist aber ein Netzbetrieb günstig. Am vorteilhaftesten ist es natürlich die Batterie mittels Strom einer Solarenergieanlage, eines Windkraftwerks oder einer Wärmepumpe aufzuladen; am allergünstigsten ist es natürlich, die erfindungsgemässe Anlage direkt mit einer solchen Energieanlage, z.B. mit Solarpanelen, auszurüsten.

Da gelegentlich defekte Batterien anfallen, empfiehlt es sich, die Messstation mit einer Prüfvorrichtung zum Ermitteln defekter bzw. nicht mehr aufladbarer Batterien zu versehen und eine Vorrichtung zum Entfernen solcher Batterien aus der Bearbeitungsstrecke vorzusehen; sie können bis zu ihrer Reparatur oder Entsorgung in einem Zwischenlager aufbewahrt werden.

Die Annahmestelle und die Abgabestelle können kombiniert oder in einem gewissen Abstand an der Fahrzeugservicestrecke angeordnet sein; im letzteren Fall muss eine Transportvorrichtung für das batterielose Fahrzeug vorgesehen sein, z.B. mit Fördermittel, wie sie in Autowaschanlagen üblicherweise verwendet werden.

Wie bei Treibstofftankstellen üblich, ist die Verrechnungsstelle meistens der Abgabestelle der neuen Batterie nachgeschaltet oder mit ihr kombiniert.

Es wurde schon erwähnt, dass damit zu rechnen ist, dass eine Vielzahl von Batterietypen im Gebrauch sein werden. Um alle Fahrzeuge bedienen zu können, muss die erfindungsgemässe Anlage möglichst viele Typen solcher Batterien vorrätig halten. Zur Auswahl der passenden Batterie kann an der Fahrzeugservicestrecke eine Batteriewählstation vorgesehen sein. Da die verschiedenen Batterietypen voraussichtlich verschiedene Preise haben, muss die Batteriewählstation mit der Rechnereinheit verbunden werden, in welcher der Unterschied der Werte der energiereichen und der energiearmen Batterien ermittelt wird.

Es wird von vielen Benützern als Vorteil erachtet, wenn an der Fahrzeugservicestrecke eine Begleichungswählstation vorgesehen ist, mit welcher aus einer Vielzahl von Begleichungsmodalitäten der dem Benützer angenehme Begleichungsmodus ausgewählt werden kann. Beispielsweise kann zwischen einer sofortigen Bezahlung mit beliebigem Zahlungsmittel oder einer Verrechnung gewählt werden. Die Begleichungswählstation muss daher entsprechend mit der Rechnereinheit bzw. einer Zahlstation und/oder mit einer Verrechnungsstelle, eines Finanzverwaltungsinstitutes, z.B. einer Bank oder einer Kreditkartenverrechnungstelle verbunden sein.

Zur Bezahlung der Kosten des Batterietauschs kann an die Verrechnungsstation eine gegebenenfalls integrierte Zahlstation angeschlossen sein, welche eine Annahmevorrichtung für münzenartige Zahlungsmittel, z.B. Geldstücke oder Jetons, für gutscheinartige Zahlungsmittel, z.B. Banknoten oder abonnementsähnliche Kartonstreifen, oder ein Lesegerät für Kreditkarten aufweist, und zwar einzeln oder in Kombination. Natürlich kann die Verrechnungsstation auch in einem Kassengebäude angeordnet und bedient sein.

Damit die Anlage problemlos von verschiedensten Benützern, auch älteren Leuten, bedient werden kann, ist in Anbetracht des grossen Gewichtes der Batterien erfindungsgemäss vorgesehen, dass die Handhabung der Batterien gerätegestützt erfolgt. Dies kann z.B. mittels eines Multifunktional-Roboters geschehen, der Bewegungen jeder Art ausführt und mit dem auch schlecht zugängliche Batterieaufnahmekammern bedient werden können. Dabei besteht die Möglichkeit, dass das Fahrzeug durch den Roboter oder durch die Batterie beschädigt wird. Dies lässt sich vermeiden, wenn die gerätegestützte Handhabung der Batterien durch eine Translationseinrichtung bewerkstelligt wird, wobei mit Vorteil Positionierungsorgane vorgesehen sind, um das Fahrzeug in einer Annahme- oder Abgabestation zu positionieren.

Bei den bisher bekannten Elektrofahrzeugen sind die Batterieaufnahmekammern im allgemeinen schlecht zugänglich, da bei der Konzeption der Fahrzeuge davon ausgegangen wurde, dass die Batterien am Netz aufgeladen werden und nur gelegentlich, und zwar in Werkstätten, ausgetauscht werden. Eine solche Anordnung in schlechtzugänglichen Batterieaufnahmekammern erschwert ein Austauschen der Batterien, wie es erfindungsgemäss zum Abgeben elektrischer Energie an ein Fahrzeug vorgesehen ist, in hohem Masse. Im Gegensatz dazu ist beim erfindungsgemässen Fahrzeug die Beschickungsöffnung von aussen frei zugänglich, wobei sie natürlich z.B. durch einen einfach zu entfernenden Klappendeckel verschlossen werden kann.

Besonders günstig ist es, wenn die Batterieaufnahmekammer und die Beschickungsöffnung geradlinig und fluchtend angeordnet sind, entweder permanent oder so verstellbar, dass sie mindestens für den Aus- und Einbau der Batterien in diese geradlinige und fluchtende Lage bringbar sind; am Fahrzeug sind Positionierungselemente vorzusehen, die mit Positionierungsorganen einer Fahrzeugservicestrecke zusammen wirken, um die Beschickungsöffnung im Wirkbereich einer Translationseinrichtung für den Batterieneinbau oder -ausbau zu positionieren, welche gerätegestützte Handhabung der Batterien ausführt.

Weitere Einzelheiten und Vorteile der Erfindung werden im folgenden an Hand der Beschreibung einzelner Beispiele sowie der Figuren dargelegt. Dabei zeigt:
Figur 1 ein Ausführungsbeispiel des erfindungsgemässen Verfahrens und der erfindungsgemässen Anlage in einer vereinfachten schematischen Darstellung;
Figur 2 ein Ausführungsbeispiel der erfindungsgemässen Anlage mit einem Strassenfahrzeug, ausschnittsweise, in einem Schaubild;
Figur 3 ein erfindungsgemässes Fahrzeug, in einem Schaubild;
Figur 4 eine Vorrichtung zum Ein- und Ausbauen einer Batterie sowie ein Fahrzeug, ausschnittsweise in einer Ansicht; und
Figur 5 eine Einzelheit der in Figur 4 dargestellten Vorrichtung, vereinfacht.

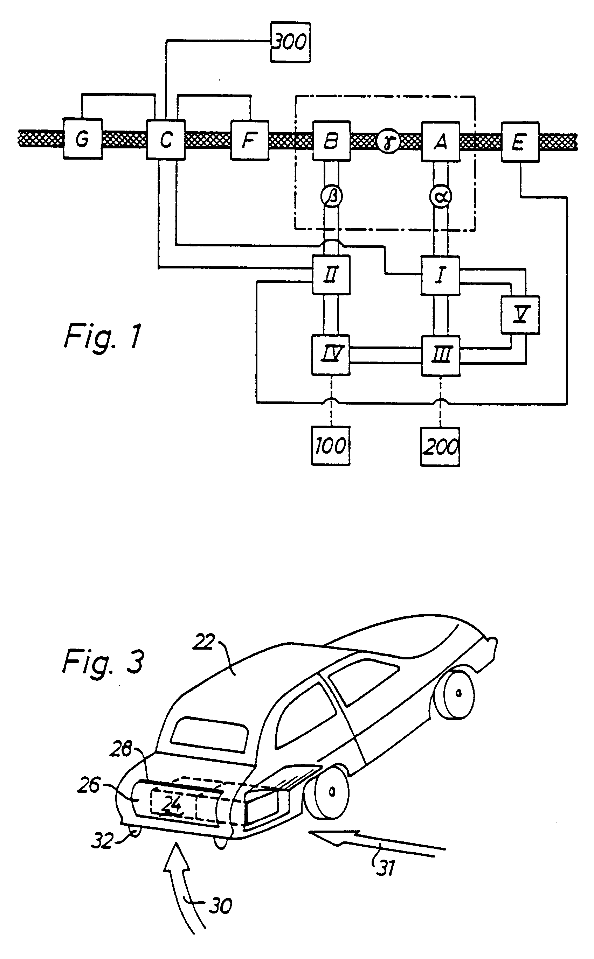

Es sei vorausgeschickt, dass bei der in Figur 1 schematisch dargestellten Anlage die Stationen einer Fahrzeugservicestrecke mit Grossbuchstaben, die Stationen einer Batteriebearbeitungsstrecke mit römischen Zahlen, Fördervorrichtungen mit griechischen Buchstaben und externe Einrichtungen mit arabischen Zahlen bezeichnet sind; Transportwege für Fahrzeuge sind als dick ausgezogene Linien und Transportwege für Batterien mit Doppellinien bezeichnet; Leitungen zur Datenübertragung sind mit normalen Linien und Leitungen zur Energieübertragung mit gestrichelten Linien dargestellt.

Die Anlage weist eine Annahmestelle (A) für energiearme Batterien und eine Abgabestelle (B) für energiereiche Batterien auf, ferner eine Vorrichtung (α) zum Ausbau der energiearmen Batterien aus einen Fahrzeug und eine Vorrichtung (β) zum Einbau der energiereichen Batterie in das Fahrzeug. Die Annahmestation (A), die Abgabestation (B) und die Vorrichtungen (α,β) können auch gesamthaft eine integrale Einrichtung der Anlage bilden, wie es durch den sie eingrenzenden Rahmen angedeutet ist.

Wenn die Annahmestation (A) und die Abgabestation (B) von einander beabstandet sind, wie bei der in Figur 1 dargestellten Anlage, so ist ausserdem eine sie zu bindende Transporteinrichtung für die auf dieser Strecke batterielosen Fahrzeuge vorgesehen.

Die Anlage weist ferner eine Messstation (I) auf in welcher die restliche Energie der ausgebauten Batterie festgestellt wird, sowie ein Batteriemagazin (II), welches energiereiche Batterien zum Einbau in Fahrzeuge enthält.

Die Messstation (I) ist mit einer Verrechnungsstation (C) verbunden, und zwar über eine nicht dargestellte Rechnereinheit, in welcher der Unterschied der Werte der energiereichen Batterie und der energiearmen Batterie ermittelt wird. Die Verrechnungsstation (C) speichert diesen Unterschied, der den für einen Batteriewechsel zu entrichtenden Kosten entspricht, bis zur sofort anschliessenden oder späteren Begleichung dieser Kosten durch einen Benützer der Anlage.

Die bisher beschriebenen Bauteile bilden das Kernstück der Anlage und ihre Wirkungsweise ist die folgende: Ein Fahrzeug gelangt in die Abgabestation (A). Mittels der Vorrichtung (α) wird seine energiearme Batterie ausgebaut und mit einer nicht dargestellten, üblichen Fördervorrichtung, die mit der Vorrichtung (α) kombiniert sein kann, in die Messstation (I) gebracht, wo gemessen wird, wieviel restliche Energie die Batterie enthält. Das Fahrzeug wird mittels der Transporteinrichtung (γ) in die Abgabestation (B) gebracht. Aus dem Batteriemagazin (II) gelangt eine energiereiche Batterie über eine Fördervorrichtung und die separate oder mit der Fördervorrichtung kombinierte Vorrichtung (β) in die Abgabestation (B) und wird dort in das Fahrzeug eingebaut.

Der in der Messstation (I) gemessene Wert wird über die Rechnereinheit an die Verrechungsstation (C) weiter gegeben, wo die ermittelten Kosten gespeichert werden. Die Begleichung dieser Kosten kann auf verschiedene Weise erfolgen. So kann z.B. eine Zahlstation (G) an die Verrechnungsstation (C) angeschlossen sein. Diese Zahlstation kann integral mit der Verrechnungsstation (C) ausgebildet sein und eine sofortige Bezahlung ermöglichen. Zur sofortigen Bezahlung kann sowohl Bargeld in Form von Münzen und/oder Noten verwendet werden, es ist aber auch möglich, die Zahlstation (G) so auszubilden, dass sie Jetons oder abonnementsartige Gutscheine aus Papier oder Karton, z.B. mit Felder, die entwertet werden können, annimmt, und die letzteren ganz oder teilweise entwertet. Ausserdem kann die Zahlstation (G) eine Leseeinrichtung für Kreditkarten aufweisen, sowie eine Speichervorrichtung für die dabei gelesenen Daten in Kombination mit dem zu begleichenden Betrag. Natürlich kann auch eine bediente Zahlstation, z.B. in einem Servicegebäude, vorgesehen sein.

Es ist auch möglich, die Verrechungsstation (C) direkt mit einem Finanzverwaltungsinstitut (300) zu verbinden, z.B. einer Bank wo die Kosten des Batteriewechsels einem Konto belastet werden, oder einer Kreditkartenverrechnungsstelle, welche die Kosten später fakturiert.

Natürlich kann eine Anlage auch so ausgerüstet sein, dass sie wahlweise alle diese Modalitäten der Begleichung zulässt, wobei man den gewünschten Modus an einer Wählstation (F) bestimmt. Die Wählstation (F) ist der Verrechnungsstation (C) vorgeschaltet, oder sie ist mit der Verrechnungsstation (C) kombiniert. Es ist auch möglich, die Wählstation (F) an einem anderen Ort der Fahrzeugservicestelle vorzusehen, gegebenenfalls in Kombination mit einer Batteriewählstation (E).

Die Batteriewählstation (E) ermöglicht es, aus einer Vielzahl von Typen von Batterien denjenigen Typ auszuwählen, der für das entsprechende Fahrzeug, bei dem der Batteriewechsel durchgeführt werden soll, benötigt wird. Die Batteriewählstation (E) ist mit dem Batteriemagazin (II) verbunden; sie ist ausserdem direkt oder über das Batteriemagazin (II) mit der Verrechnungsstelle (C) verbunden.

Auf die Batteriewählstation kann verzichtet werden, wenn die Messstation (I) eine Vorrichtung aufweist, welche den Typ der ausgebauten Batterie feststellt und diesen dem Batteriemagazin (II) mitteilt.

Die ausgebauten energiearmen Batterien müssen vor ihrer Wiederverwendung neu aufgeladen werden. Dies kann ausserhalb der Anlage erfolgen, wobei die ausgebauten Batterien in einem Zwischenlager (V) gestapelt und von dort abgeholt werden, während gleichzeitig energiereiche Batterien ins Batteriemagazin (II) geliefert werden.

Bei der in Figur 1 dargestellten Anlage erfolgt jedoch die Aufladung der Batterien an Ort, in einer Aufladestation (IV), welche sich zwischen der Messstation (I) und dem Batteriemagazin (II) befindet. Es ist auch möglich, das Batteriemagazin (II) so auszubilden, dass die Aufladung der Batterien dort stattfindet.

Zwischen der Messstation (I) und der Aufladestation (IV) ist separat oder der Messstation zugeordnet eine Prüfstation (III) vorgesehen, welche defekte Batterien feststellt. Solche defekte Batterien werden aus der Batteriebearbeitungsstrecke entfernt und bis zur späteren Entsorgung in das Zwischenlager (V) verbracht.

Die Energie zum Aufladen der Batterien wird der Aufladestation (IV) vom Netz (100) oder von einer andern Energieerzeugungsanlage (200) zugeführt, z.B. von einer Solaranlage, einer Wärmepumpe oder einem Windkraftwerk gegebenenfalls auch von einem angeschlossenen hydraulischen Kleinkraftwerk.

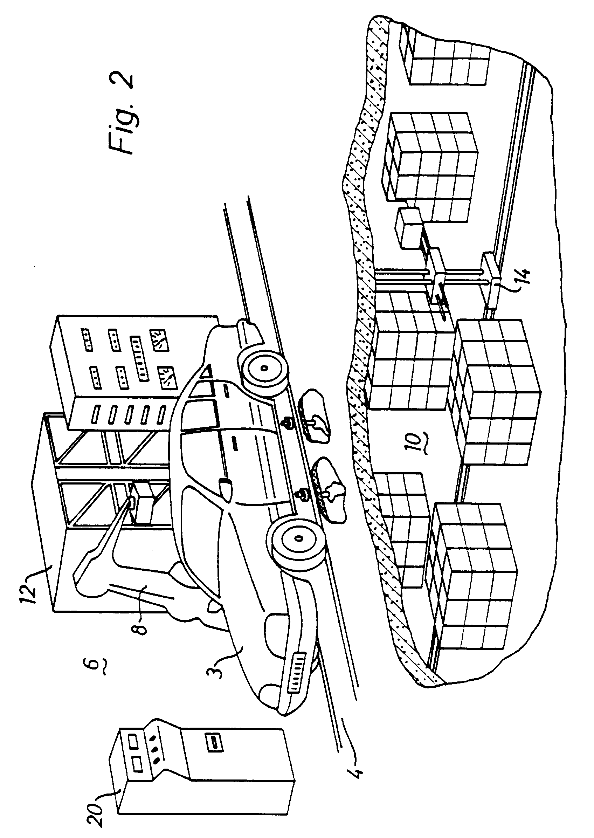

Figur 2 zeigt anschaulich eine Anlage (2) mit einem Fahrzeug (3) auf einer Fahrzeugservicestrecke (4) in einer kombinierten Annahme- und Abgabestation (6). Die Annahme- und Abgabestation (6) weist als Vorrichtung zum Ausbauen und Einbauen der Batterie in das Fahrzeug einen Multifunktions-Roboter (8) auf; zum Transport der Batterie in eine unterirdische Ladestation (10), welche auch als Batteriemagazin dient, ist ein Magazinlift (12) vorgesehen. Im Batteriemagazin (C) sind weitere an sich bekannte Fördermittel für die Batterien vorgesehen. Der Roboter (8), der Magazinlift (12) die Aufladestation (10) und die Fördermittel (14) bilden zusammen die Batteriebearbeitungsstrecke der Anlage.

Die Fahrzeugservicestrecke (4) weist eine Führungsstrecke (16) auf, welche als Transportvorrichtung für das Fahrzeug (3) dient und dieses längs der Fahrzeugservicestrecke (4) verschiebt. Positionsorgane (18) dienen dazu, das Fahrzeug (3) im Bereich des Multifunktions-Roboters (8) zu positionieren. Eine in der Nähe des Multifunktions-Roboters (8) angeordnete Säule (20) dient als Verrechnungs- und Zahlstelle.

In der in Figur 1 gezeigten Anlage, welche als Vorrichtung zum Aus- und Einbauen der Batterien mit einem Roboter ausgerüstet ist, können auch Batterien von Fahrzeugen ausgewechselt werden, die in verhältnismässig schlecht zugänglichen Batterieaufnahmekammer des Fahrzeuges, z.B. im Innern des Kofferraums angeordnet sind, und die sich nicht durch eine lineare Bewegung aus- bzw. einbauen lassen. Diese Anlage mit dem Roboter eignet sich daher für alle Arten von Elektromobilen und Hybridfahrzeugen, insbesondere aber für solche, die wie bisher üblich so konzipiert sind, dass das Abgeben von elektrischer Energie ans Fahrzeug durch Aufladen der Batterie und nicht durch Austausch der Batterie vorgesehen ist.

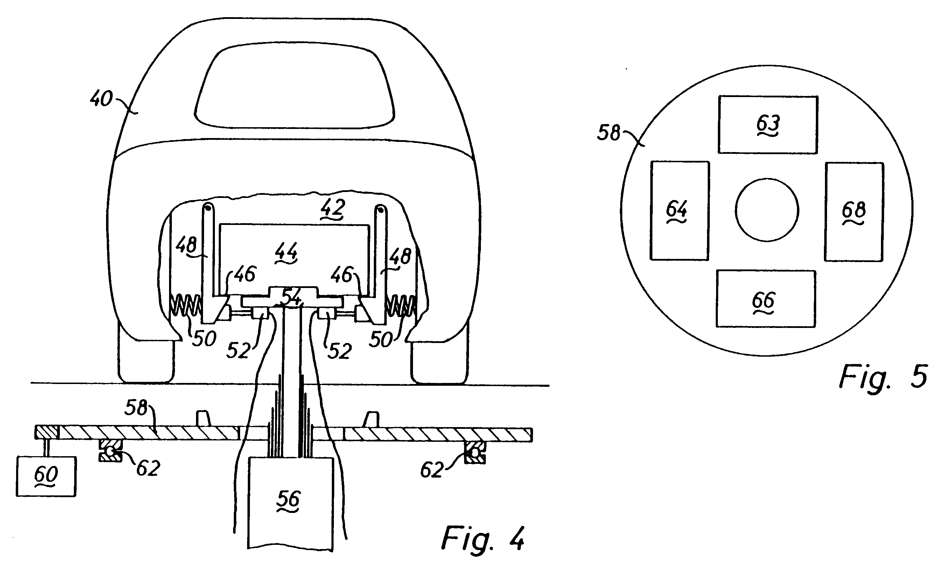

Figur 3 zeigt ein als Strassenfahrzeug ausgebildetes Fahrzeug (22) nach der Erfindung, das so ausgebildet ist, dass eine Abgabe von Energie an das Fahrzeug durch das erfindungsgemässe Verfahren bzw. mit der erfindungsgemässen Anlage besonders vorteilhaft durchgeführt werden kann. Eine Batterie (24) befindet sich in einer Batterieaufnahmekammer (26), welche über eine Beschickungsöffnung (28 oder 29) beschickbar ist. Eine nicht dargestellte Vorrichtung dient zum Ausbauen oder Einbauen der Batterie (24). Diese Vorrichtung ist als Translationsvorrichtung ausgebildet und verschiebt die Batterie längs einer geradlinigen, horizontalen seitlichen Ladestrecke (31) oder längs einer unten am Fahrzeug liegenden vertikalen Ladestrecke (30). Die Ladestrecke (30 bzw. 31), die entsprechende Beschickungsöffnung (28 bzw. 29) und die Batterieaufnahmekammer (26) sind fluchtend angeordnet. Das Fahrzeug (22) weist Positionierungselemente (32) auf, welche mit Postionierungorganen an der im weiteren nicht dargestellten Fahrzeugservicestrecke zusammen wirken, um das Fahrzeug (22) so zu positionieren, dass die Beschickungsöffnung (28 bzw. 29) und die Batterieaufnahmekammer (26) auf die längs der Laderichtung (30 bzw. 31) wirkende Vorrichtung zum Aus- bzw. Einbau der Batterie (26) ausgerichtet sind.

Figur 4 zeigt ein Fahrzeug, insbesondere ein Strassenfahrzeug (40) mit einer von unten beschickbaren Batterieaufnahmekammer (42). Eine darin befindliche Batterie (44) wird durch Randflächen (46) an zwei schwenkbaren Armen (48) gehalten, welche Arme (48) durch Federn (50) in ihre Halte- bzw. Wirkstellung vorgespannt sind. Um die Batterie (44) aus der Batterieaufnahmekammer (42) zu entfernen, werden die Arme (48) mittels Entriegelungszylindern (52) nach aussen geschwenkt, nach dem eine Aufnahmefläche (54) der Vorrichtung zum Aus- bzw. Einbauen der Batterien mittels eines fluidbetätigten Ladezylinders (56) an die Unterfläche der Batterie (44) angehoben worden ist. Die Batterie (44) wird dann abgesenkt, bis sie auf einem Drehteller (58) aufliegt, dessen Antrieb sich beim Drehzentrum (60) befindet, und der über übliche Lagervorrichtung wie Wälzlagor (62) abgestützt ist.

Figur 5 zeigt diesen Drehteller (58) stark vereinfacht und von oben gesehen. Um das Drehzentrum (60) sind mehrere, d.h. mindestens zwei, im vorliegenden Beispiel aber vier Aufnahmestellen (63, 64, 66, 68) für Batterien (44) vorgesehen. Von diesen Aufnahmestellen ist jeweils eine Stelle frei zur Aufnahme der energiearmen Batterie, die aus dem Fahrzeug ausgebaut wird und mindestens eine weitere Stelle mit einer passenden energiereichen Batterie zum Einbau in das Fahrzeug besetzt. Sobald die energiearme Batterie, wie oben beschrieben, auf dem Drehteller (58) aufliegt, wird die energiereiche Batterie durch den Ladezylinder (56) in die Batterieaufnahmekammer (42) gebracht und dort mittels der Arme arretiert. Die ausgebaute energiearme Batterie wird anschliessend in nicht dargestellter Weise entweder auf dem Drehteller aufgeladen, dessen eine Stelle bei seiner Drehung in eine Aufladestellung gedreht worden ist, oder durch weitere Fördermittel in eine Aufladestation gebracht und nach dem Aufladen bei Bedarf zum Drehteller zurück transportiert.

Der Drehteller (58) kann auch so ausgebildet sein, das er eine Vielzahl verschiedener Typen von Batterien enthält von denen, wie früher beschrieben, die passende an einer Batteriewählstation ausgewählt werden kann.

Es liegt im Rahmen der Erfindung, dass die Stationen der Fahrzeugservicestrecke und der Batteriebearbeitungsstrecke in verschiedenster Weise ausgebildet und in verschiedensten Zusammenstellungen zu multifunktionalen Einrichtungen zusammengefasst werden können.

Die in der erfindungsgemässen Anlage vorgesehenen Einrichtungen mechanischer, elektrischer, elektronischer und gegebenenfalls optischer Art sind allgemein üblich und werden daher nicht im einzelnen beschrieben; sie zeigen aber in ihrer kombinierten Verwendung in der erfindungsgemässen Anlage und insbesondere bei der Abgabe von Energie an ein Fahrzeug wie das erfindungsgemässe Fahrzeug besonders günstige Wirkungen, welche dazu führen, dass in Folge der fortschrittlichen und einfachen Art der Energiezufuhr zum Fahrzeug die Verbreitung von Elektromobilen und Hybridfahrzeugen stark gefördert wird.

## Patentansprüche

1. Verfahren zur Abgabe elektrischer Energie an ein Strassenfahrzeug, das einen elektromotorischen Antrieb mit einer Batterie als Energiespeicher aufweist, bei welchem eine energiearme Batterie aus dem Fahrzeug entnommen wird, eine energiereiche Batterie in das Fahrzeug eingesetzt wird, dadurch gekennzeichnet, dass die energiearme Batterie in einer Annahmestation (A) mindestens halbautomatisch dem Fahrzeug entnommen wird und in einer Messstation (I) deren Restenergie ausgemessen wird, mittels einer mit der Messstation (I) verbundenen Verrechnungsstation (C) der Energiewertunterschied zwischen der energiearmen Batterie und der einzusetzenden energiereichen Batterie ermittelt wird, und die engeriereiche Batterie in einer Abgabestation (B) mindestens halbautomatisch in das Fahrzeug eingesetzt wird.

2. Verfahren nach Anspruch 1, dadurch gekennzeichnet, dass die entnommene Batterie entsprechend dem in der Messstation (I) bestimmten Restenergiewert in einer Aufladestation (IV) wieder aufgeladen wird und für die erneute Verwendung in einem Batteriemagazin (II) bereit gestellt wird.

3. Verfahren nach Anspruch 1, dadurch gekennzeichnet, dass die entnommene Batterie in einer Prüfstation (III) auf ihre Wiederverwendungsfähigkeit untersucht wird.

4. Vorrichtung zum Abgeben elektrischer Energie an ein Strassenfahrzeug mit elektromotorischem Antrieb mit einer Batterie als Energiespeicher, welche Vorrichtung eine Annahmestation (A) für energiearme Batterien, ein Batteriemagazin (II) und eine Abgabestation (B) für energiereiche Batterien sowie mindestens eine Vorrichtung (2,B) zur gerätegestützten Handhabung der Batterien aufweist, mit einer an die Annahmestelle (A) angeschlossenen Messstation (I) zum Messen der Restenergie der energiearmen Batterie, mit einer mit der Messstation verbundenen Verrechnungsstation (C) zum Ermitteln des Unterschieds der Energiewerte zwischen der energiereichen und der energiearmen Batterie, und zum Speichern des genannten Unterschiedes bis zur sofortigen oder späteren Begleichung der Kosten des Batterieaustausch.

5. Vorrichtung nach Ansprüche 4, dadurch gekennzeichnet, dass die Annahmestation (A) und die Abgabestation (B) beabstandet an einer Fahrzeugservicestrecke angeordnet und durch eine Transportvorrichtung (γ) für das batterielose Strassenfahrzeug verbunden sind.

6. Vorrichtung nach einem der Ansprüche 4 oder 5, dadurch gekennzeichnet, dass die Verrechungsstelle (C) an der Servicestrecke und nach der Abgabestation (B) angeordnet ist.

7. Vorrichtung nach einem der Ansprüche 4 - 6, dadurch gekennzeichnet, dass zwischen der Annahmestation (A) und die Abgabestation (B) eine Bearbeitungstrecke für die Batterien vorgesehen ist, an welcher hintereinander die Messstation (I), eine Aufladestation (IV) und das Batteriemagazin (II) angeordnet sind.

8. Vorrichtung nach einem der Ansprüche 4 - 7, dadurch gekennzeichnet, dass die Aufladestation (IV) mit einer Energieanlage (2) wie z.B. einer Solarenergieanlage und/oder einem elektrischen Verteilernetz (1) verbunden ist.

9. Vorrichtung nach einem der Ansprüche 4 - 8, dadurch gekennzeichnet, dass der Messstation (II) eine Prüfvorrichtung (III) zum Ermitteln defekter Batterien und eine Vorrichtung zum Entfernen der defekten Batterien aus der Batteriebearbeitungsstrecke zugeordnet ist.

10. Vorrichtung nach einem der Ansprüche 4 - 9, dadurch gekennzeichnet, dass eine Batteriewählstation (E) an der Servicestrecke vorgesehen ist, um aus einer Vielzahl von Typen von Batterien einen Typ zu wählen, welche Batteriewählstation (E) mit der Verrechnungsstation (C) verbunden ist.

11. Vorrichtung nach einem der Ansprüche 4 - 10, wobei der Verrechungsstation (C) eine Zahlstation (G) mit einer Annahmevorrichtung für Münzen- oder gutscheinartige Zahlungsmittel und/oder ein Lesegerät für Kreditkarten zugeordnet ist.

12. Vorrichtung nach einem der Ansprüche 4 - 11, dadurch gekennzeichnet, dass eine Begleichungswählstation (F) an der Servicestrecke vorgesehen ist, um aus einer Vielzahl von Begleichungsmodalitäten einen Begleichungsmodus zu wählen, welche Begleichungswählstation (F) mit der Verrechnungsstation (C) und/oder einem Finanzinstitut, wie einer Bank oder einer Kreditkartenverrechungsstelle verbunden ist.

13. Vorrichtung nach einem der Ansprüche 4 - 12, dadurch gekennzeichnet, dass die Vorrichtung zur gerätegestützten Handhabung der Batterien als Multifunktionroboter (8) ausgebildet ist.

14. Vorrichtung nach einem der Ansprüche 4 - 13, dadurch gekennzeichnet, dass die Vorrichtung zur gerätegestützten Handhabung der Batterien eine Translationseinrichtung für Batterien aufweist, und wobei die Fahrzeugservicestrecke Positionierungsorgane (18) aufweist, um das Fahrzeug (4) in der Annahme- und/oder der Abgabestation zu positionieren.

15. Fahrzeug, insbesondere Strassenfahrzeug, mit einem elektromotorischem Antrieb mit einer Batterie (44) als Energiespeicher, welche Batterie in einer Batterieaufnahmekammer (42) angeordnet ist, die eine frei zugängliche Beschickungsöffnung (28, 29) aufweist zum gerätegestützten Aus- bzw. Einbau der Batterie.

16. Fahrzeug nach Patentanspruch 15, wobei mindestens beim Aus- und Einbau der Batterie (44) die Beschickungsöffnung (28, 29) und die Batterieaufnahmekammer (42) linear fluchtend angeordnet sind und wobei Bauelemente am Fahrzeug vorgesehen sind, zum gerätegestützten Handhaben der Batterien beim Ein- bzw. Ausbau und in Zusammenwirkung mit Positionierungsorganen einer Fahrzeugservicestrecke die Beschickungsöffnung (28, 29) im Wirkbereich einer Translationseinrichtung (30, 31) für Batterien (44) zu positionieren.
